# EUROPEAN PATENT APPLICATION

(11) **EP 4 198 701 A1**
(43) Date of publication of application: **21.06.2023**
(21) Application number: 21866085.0
(22) Date of filing: 11.09.2021
(51) Int. Cl.: G06F 3/06

(54) **ACTIVE-ACTIVE STORAGE SYSTEM AND DATA PROCESSING METHOD BASED ON SAME**

(30) Priority: 11.09.2020 CN 202010955301; 30.12.2020 CN 202011628940
(71) Applicant: Huawei Technologies Co., Ltd., Shenzhen, Guangdong 518129 (CN)
(72) Inventor: DU, Xiang, Shenzhen, Guangdong 518129 (CN); WENG, Yujia, Shenzhen, Guangdong 518129 (CN); LI, Xiaohua, Shenzhen, Guangdong 518129 (CN); ZHANG, Peng, Shenzhen, Guangdong 518129 (CN)
(74) Representative: Huawei European IPR
(86) International application number: PCT/CN2021/117843
(87) International publication number: WO 2022/053033

(57) **Abstract**

Embodiments of this application provide an active-active storage system and a data processing method based on the active-active storage system. The active-active storage system includes a first storage device and a second storage device. The first storage device is configured to: receive data of a first file sent by a client cluster to a file system, store the data of the first file, and send first copy data of the data of the first file to the second storage device. The second storage device is configured to: receive data of a second file sent by the client cluster to the file system, store the data of the second file, and send second copy data of the data of the second file to the first storage device. In embodiments of this application, both the first storage device and the second storage device can store file data by using a same file system, and can back up the file data of the peer ends, to implement the active-active storage system in an active-active mode.

## Description

### TECHNICAL FIELD

This application relates to the storage field, and in particular, to an active-active storage system and a data processing method thereof.

### BACKGROUND

For a network storage cluster, for example, a network attached storage (NAS) cluster, during implementation of activeness-activeness, when receiving written data, a first storage device writes the received written data locally, and synchronizes the received written data to a peer storage device as backup data. In this way, when the first storage device is faulty or the first storage device is disconnected from a second storage device, the second storage device can take over a service of the first storage device by using the backup data, to ensure that the service is not interrupted, that is, implement activeness-activeness in an active-passive mode. However, activeness-activeness in an active-active mode cannot be implemented.

### SUMMARY

This application provides an active-active storage system and a method for implementing the active-active storage system, to implement activeness-activeness in an active-active mode, so that a storage device in the active-active storage system can access data in a same file system.

A first aspect of this application provides an active-active storage system. The active-active storage system includes a first storage device and a second storage device. The first storage device is configured to: receive data of a first file sent by a client cluster to a file system, store the data of the first file, and send first copy data of the data of the first file to the second storage device. The second storage device is configured to: receive data of a second file sent by the client cluster to the file system, store the data of the second file, and send second copy data of the data of the second file to the first storage device.

Both the first storage device and the second storage device can store file data by using a same file system, and can back up file data of the peer ends, to implement the active-active storage system in an active-active mode. A conventional NAS device also has a file system. However, two storage devices in an active-passive mode each have an independent file system. Both the two independent file systems need to occupy computing/storage resources of the storage devices, resulting in low resource utilization and complex management. This is not real activeness-activeness. In this application, the first storage device and the second storage device have the same file system, to improve resource utilization, and reduce management complexity. In addition, when a client sends an access request to the storage device, the client also sends the request to the same file system. Therefore, access efficiency of the client is also improved.

In a possible implementation of the first aspect of this application, the active-active storage system further includes a virtual node set, and the virtual node set includes a plurality of virtual nodes. A computing resource is allocated to each virtual node, and the computing resource comes from a physical node in the first storage device or the second storage device.

The physical node may be control nodes of the first storage device or the second storage device, or may be a CPU in a control node or a core in a CPU. The virtual node is a logical concept, and is used as a resource allocation medium to isolate computing resources in the system. In this resource management manner, an independent computing resource is allocated to each virtual node, and computing resources used by files/directories corresponding to different virtual nodes are also independent. This facilitates capacity expansion or reduction of the active-active storage system, and also facilitates implementation of a lock-free mechanism between the computing resources, thereby reducing complexity.

In a possible implementation of the first aspect of this application, the active-active storage system further includes a management device. The management device is further configured to create a global view. The global view is used to record a correspondence between each virtual node and the computing resource allocated to the virtual node. The management device is further configured to send the global view to the first storage device and the second storage device. The first storage device and the second storage device store the global view.

The management device may be used as a software module and installed on the first storage device or the second storage device, or may be an independent device. When the management device is used as a software module installed on the first storage device, after generating the global view, the management device sends the global view to the first storage device and the second storage device for storage by interacting with other modules in the storage devices.

The virtual nodes in the virtual node set are separately presented to an application in the first storage device and an application in the second storage device in a manner of the global view, and the application in the first storage device and the application in the second storage device use the physical nodes of the peer ends as resources of the local ends for use, so that interaction with the physical nodes of the peer ends is more convenient.

In a possible implementation of the first aspect of this application, when storing the data of the first file, the first storage device determines, based on an address of the data of the first file, a first virtual node corresponding to the first file, determines, based on the first virtual node and the global view, a computing resource allocated to the first virtual node, and sends, based on the computing resource allocated to the first virtual node, the data of the first file to a physical node corresponding to the computing resource, so that the physical node stores the data of the first file to a memory of the physical node.

By using the virtual node set provided by the global view, the first storage device can receive data of a file that belongs to a physical node corresponding to any virtual node in the virtual node set, and forward the received data of the file to the physical node, to which the file belongs, for processing. In this way, when writing data, a user does not need to perceive an actual storage location of the file, and can operate the file by using any storage device.

In a possible implementation of the first aspect of this application, the first virtual node has at least one backup virtual node, and a physical node corresponding to the first virtual node and a physical node corresponding to the backup virtual node are located in different storage devices. After determining the first virtual node corresponding to the first file, the first storage device further determines the backup virtual node corresponding to the first virtual node, determines, based on the backup virtual node and the global view, the physical node corresponding to the backup virtual node, and sends the first copy data to the physical node corresponding to the backup virtual node, so that the physical node corresponding to the backup virtual node stores the first copy data to the physical node.

Data that is of a file and that is written to the first storage device is backed up to the second storage device. After the first storage device is faulty or is disconnected from the second storage device, a service of the first storage device can be taken over by using the backup data, to improve system reliability.

In a possible implementation of the first aspect of this application, a file and a directory that are included in the file system are distributed in physical nodes corresponding to the plurality of virtual nodes in the virtual node set.

That the file and the directory that are included in the file system are distributed in the physical nodes corresponding to the plurality of virtual nodes in the virtual node set specifically means that the file and the directory that are included in the file system are scattered to a plurality of physical nodes for processing. In this way, physical resources of the first storage device and the second storage device can be fully used, to improve file processing efficiency.

In a possible implementation of the first aspect of this application, one or more shard identifiers are set for each virtual node in the virtual node set. One shard identifier is allocated to each directory and file in the file system. The physical nodes in the first storage device and the second storage device distribute, based on the shard identifier of each directory and file, the directory and the file to a physical node corresponding to a virtual node to which the shard identifier belongs.

The file and the directory that are included in the file system can be more conveniently distributed to all the physical nodes of the first storage device and the second storage device by using the shard identifier.

In a possible implementation of the first aspect of this application, a first physical node in the first storage device is configured to: receive a creation request of the first file, select one shard identifier for the first file from one or more shard identifiers set for a virtual node corresponding to the first physical node, and create the first file in the storage device.

When the file is created, a shard identifier of a virtual node of a corresponding physical node that receives a file creation request is allocated to the file, so that the file creation request is not forwarded to another physical node, to improve processing efficiency.

In a possible implementation of the first aspect of this application, when the second storage device is faulty or a link between the first storage device and the second storage device is disconnected, the first storage device is further configured to: recover the second file based on the second copy data of the data of the second file, and take over a service sent by the client cluster to the second storage device.

After the first storage device is faulty or is disconnected from the second storage device, the service of the first storage device can be taken over by using the backup data, to improve system reliability.

In a possible implementation of the first aspect of this application, the first storage device is further configured to delete, from the global view, a virtual node corresponding to a computing resource of the second storage device.

In a possible implementation of the first aspect of this application, the first storage device further has a first file system, and the second storage device further has a second file system.

A local file system and a cluster file system run on a same storage device at the same time, to provide a plurality of manners for the user to access data in the storage device.

A second aspect of this application provides a method for implementing an active-active file system. Steps included in the method are used to implement all functions performed by the first storage device and the second storage device in the active-active storage system provided in the first aspect of this application.

A third aspect of this application provides a management device. The management device is configured to create a global view. The global view is used to record a correspondence between each virtual node and a computing resource allocated to the virtual node. The management device is further configured to send the global view to a first storage device and a second storage device for storage.

The management device is configured to: monitor changes of virtual nodes in the first storage device and the second storage device, and update the global view when detecting that a new virtual node is added to a virtual set, or when a virtual node is deleted, for example, a physical node corresponding to the virtual node is faulty.

A monitoring module can monitor a change of a virtual node in the virtual node set in real time, to update the global view in a timely manner.

A fourth aspect of this application provides a storage medium, configured to store program instructions. The program instructions are used to implement functions provided by the management device provided in the third aspect.

### BRIEF DESCRIPTION OF DRAWINGS

To describe the technical solutions in embodiments of this application more clearly, the following briefly describes the accompanying drawings used in describing embodiments or the conventional technology.
FIG. 1 is an architectural diagram of an active-active storage system in an active-passive mode;
FIG. 2 is an architectural diagram of an active-active storage system in an active-active mode according to an embodiment of this application;
FIG. 3A is a flowchart of a method for establishing an active-active storage system according to an embodiment of this application;
FIG. 3B is a schematic diagram of parameters generated in a process of constructing an active-active storage system according to an embodiment of this application;
FIG. 4A is a flowchart of establishing a file system of an active-active storage system according to an embodiment of this application;
FIG. 4B is a schematic diagram of a constructed active-active system according to an embodiment of this application;
FIG. 5 is a flowchart of a method for creating a directory in a file system according to an embodiment of this application;
FIG. 6 is a flowchart of a method for querying a directory in a file system according to an embodiment of this application;
FIG. 7 is a flowchart of a method for creating a file in a file system according to an embodiment of this application;
FIG. 8 is a flowchart of a method for writing data to a file in a file system according to an embodiment of this application;
FIG. 9 is a flowchart of a method for writing data to a file in a file system according to an embodiment of this application;
FIG. 10 is a schematic diagram in which a first storage device takes over a service of a second storage device according to an embodiment of this application; and
FIG. 11 is a flowchart of a method for taking over a service of a second storage device by a first storage device according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

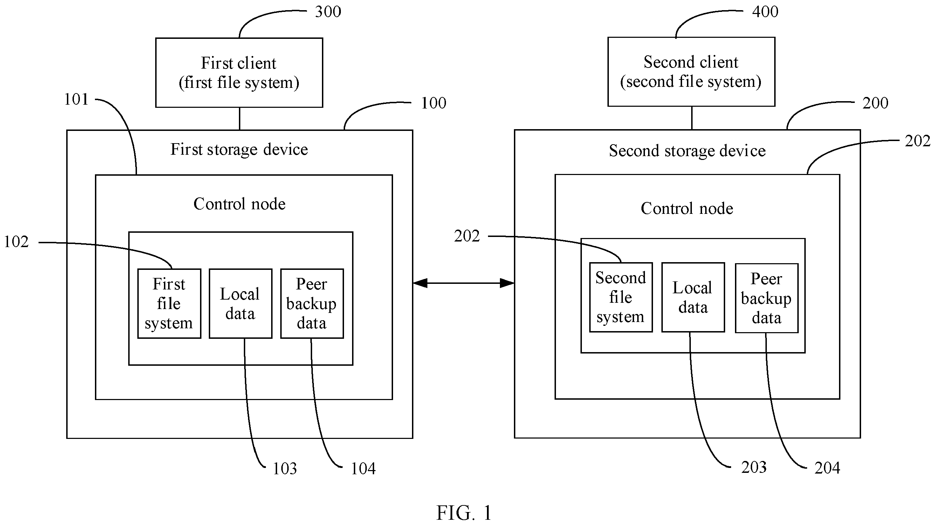

FIG. 1 is a schematic architectural diagram of an active-active system in an active-passive mode. The system 10 includes a first storage device 100 and a second storage device 200. A first file system 102 is disposed in a control node 101 of the first storage device 100 (the first storage device may include a plurality of control nodes, and for ease of description, only one control node is used as an example for description), and a second file system 202 is disposed in a control node 201 of the second storage device 200 (the second storage device may also include a plurality of control nodes, and for ease of description, only one control node is used as an example for description). After a first client 300 is connected to the first storage device 100, the first storage device 100 mounts the first file system 102 to the first client 300. After a second client 400 is connected to the second storage device 200, the second storage device 200 mounts the second file system 202 to the second client 400. Each file system has a root directory. That the storage device mounts the file system to the client means that the storage device provides a root directory of the file system for the client, and the client sets the root directory of the file system in a file system of the client, so that the client can obtain the root directory of the file system of the storage device, to access the file system of the storage device based on the root directory of the file system of the storage device. In this way, after the first file system 102 is mounted to the first client 300, the first client 300 reads and writes data by using the first file system 102, and the written data is stored as local data 103. In addition, the first storage device 100 further stores backup data of the second storage device 200, namely, peer backup data 104. Likewise, the second client 400 reads and writes data by using the second file system 202, and the written data is stored as local data 203. In addition, the second storage device 200 further stores backup data of the first storage device 100, namely, peer backup data 204. In this way, after the first storage device 100 is faulty or a link between the first storage device 100 and the second client is disconnected, the second client can take over a service of the first client 300 by using the peer backup data 204. In other words, activeness-activeness in the active-passive mode is implemented. However, in the active-active system 100 in the active-passive mode, when both the first storage device 100 and the second storage device 200 run normally, the first client 300 can only access the data in the first storage device 100 by using the first file system, but cannot access the data in the second storage device 200, and the second client 400 can only access the data in the second storage device 200 by using the second file system, but cannot access the data in the first storage device 100. In other words, activeness-activeness in the active-active mode cannot be implemented.

In the technical solution provided in embodiments of this application, a global view is set. The global view is a set of virtual nodes, and a computing resource is allocated to each virtual node in the global view. The computing resource comes from a physical node of the first storage device and a physical node of the second storage device, and the physical nodes may be a controller in the first storage device and a controller in the second storage device, or may be CPUs in controllers, or cores in CPUs, or may be servers in a distributed storage system. In embodiments of this application, each physical node can obtain the global view. In addition, each physical node further uses a same file system. In this way, the first client connected to the first storage device and the second client connected to the second storage device are mounted with the same file system. As a result, the first client can access, by using the file system and the global view, data that belongs to the file system and that is in the second storage device. The following describes, in detail with reference to the accompanying drawings, the solutions provided in embodiments of this application.

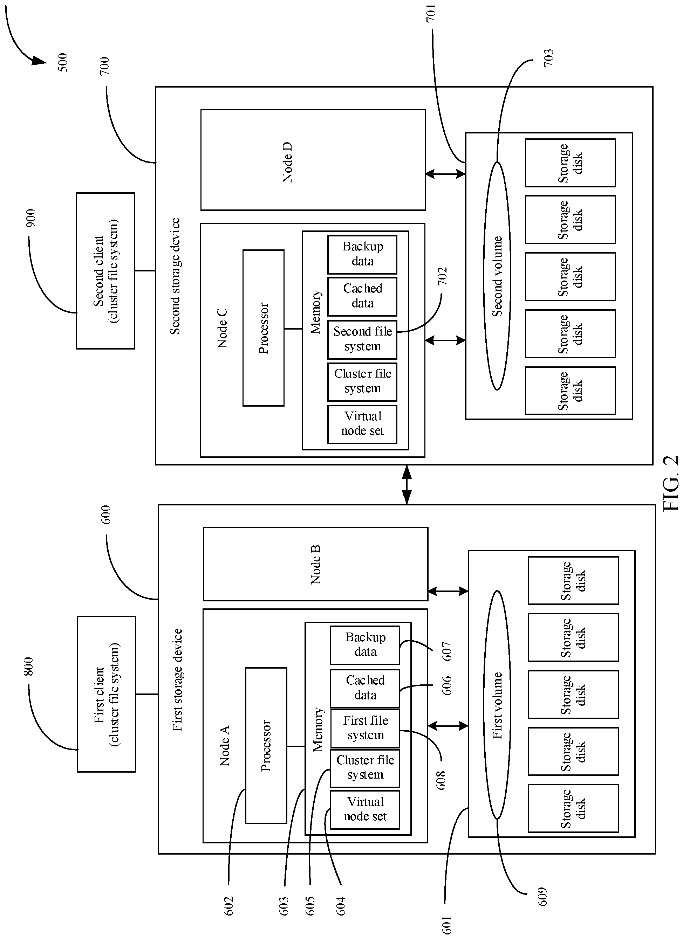

FIG. 2 is an architectural diagram of an active-active system 500 in an active-active mode according to an embodiment of this application. The system 500 includes a first storage device 600 and a second storage device 700. The first storage device 600 includes a physical node A and a physical node B. The second storage device 700 includes a physical node C and a physical node D. During actual application, the first storage device 600 and the second storage device 700 each may include more physical nodes. For ease of description, in this embodiment, only an example in which each storage device includes two physical nodes is used for description. The first storage device 600 and the second storage device 700 respectively include a persistent storage device 601 and a persistent storage device 701 that include a plurality of storage disks and that are configured to persistently store data. Based on physical storage space provided by the storage disks of the persistent storage device 601 and the persistent storage device 701, the first storage device 600 and the second storage device 700 respectively create a first volume 609 and a second volume 703. The first storage device 600 and the second storage device 700 may respectively store the data to the persistent storage device 601 and the persistent storage device 701 based on the first volume 609 and the second volume 703. For example, the storage disk may be a persistent storage medium, for example, a solid state disk (SSD) or a hard disk drive (HDD).

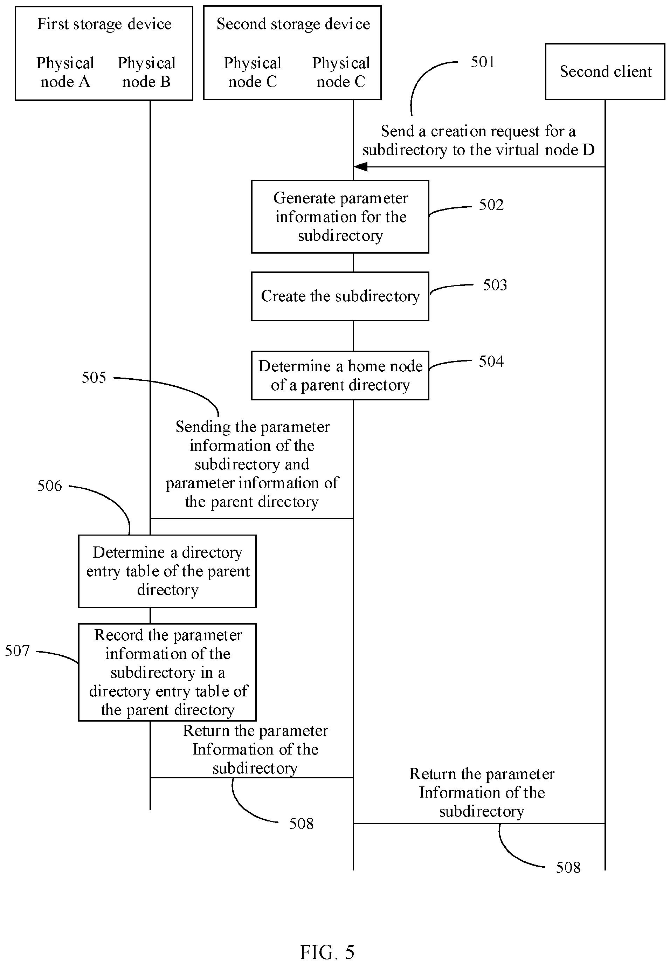

Structures of the physical node A, the physical node B, the physical node C, and the physical node D are the same. In this embodiment of this application, only the structure of the node A is used as an example for description. The physical node A includes a processor 602 and a memory 603. The memory 603 stores application program instructions (not shown in the figure) and data generated in a running process of the processor. The processor 602 executes the application program instructions to implement an active-active function in the active-active mode provided in this embodiment of this application. In addition to a first file system 608, the memory 603 further stores a global view 604, a file system 605, cached data 606, and backup data 607. A function of the first file system 608 is the same as a function of the first file system 102 in FIG. 1. Details are not described herein again. In other words, in this embodiment of this application, each physical node includes two file systems, one is a file system shared by all the physical nodes, and the other is a file system of each physical node. A detailed description of other data in the memory 603 is provided with reference to a method for implementing activeness-activeness, for example, flowcharts shown in FIG. 5 to FIG. 9. A first client 800 is connected to the first storage device 600 to access the data in the first storage device 600, and a second client 700 is connected to the second storage device 900 to access the data in the second storage device 900.

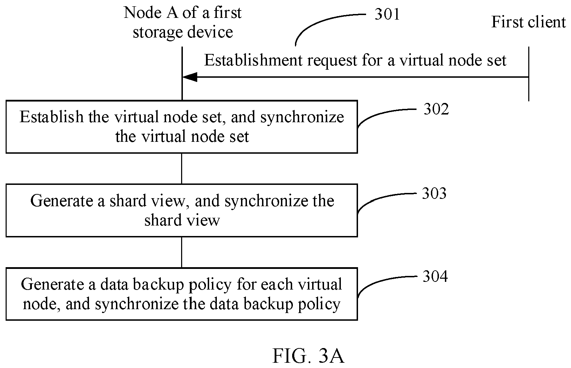

The following describes, with reference to flowcharts in FIG. 3A, FIG. 4A, and FIG. 5 to FIG. 9, the method for implementing activeness-activeness in the active-active mode according to embodiments of this application.

First, FIG. 3A is a flowchart of a method for establishing a global view according to an embodiment of this application.

Step S301: The physical node A of the first storage device 600 receives a virtual cluster establishment request sent by a client.

When the active-active system needs to be constructed, the global view is established, and a user may send a global view establishment request to the first storage device 600 by using the client. The first storage device is a primary array, and the physical node A in the first storage device 600 is a primary node. In this case, the physical node A processes the request.

Step S302: The physical node A establishes the global view 604, and synchronizes the established global view 604 to a physical node corresponding to another virtual node in the global view.

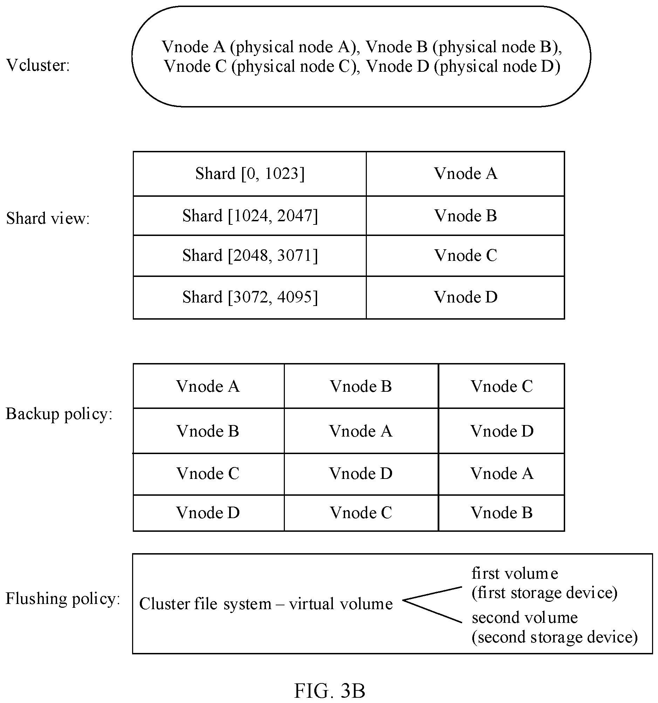

After the first storage device 600 establishes a network connection to the second storage device 700, the first storage device 600 obtains an identifier of each physical node in the second storage device 700 and an IP address of each physical node. When the global view 604 is established, the node A allocates a virtual identifier to each physical node in the first storage device 600 and the second storage device 700, to identify a virtual node, and establishes the global view to record the virtual identifier of the virtual node. A computing resource of each physical node, for example, a processor resource or a memory resource, is a computing resource allocated to the virtual node. In another embodiment, in addition to the computing resource, another physical resource, for example, bandwidth, may be further allocated to each virtual node. In this embodiment of this application, the physical resources allocated to all the virtual nodes are independent of each other. In this way, capacity expansion can be more convenient for a storage device. For example, when a new physical resource is added to the storage device, a new virtual node is generated based on the new physical resource, to increase a quantity of the virtual nodes, and the newly added virtual node is added to the global view. In distributed storage, an added server is used as a new physical resource, and a virtual node is established based on the added server, to increase the quantity of the virtual nodes in the global view. The established global view is shown as a Vcluster in FIG. 3B. For example, virtual identifiers Vnode A and Vnode B are allocated to the physical node A and the physical node B in the first storage device 600, and virtual identifiers Vnode C and Vnode D are allocated to the physical node C and the physical node D in the second storage device 700. After the global view 604 is generated, the node A stores the global view 604 to the memory 603 and the persistent storage device 601, and then synchronizes the node set table 604 to the physical nodes (the physical nodes B, C, and D) corresponding to other virtual nodes and the persistent storage medium 701 of the second storage device 700.

Step S303: The physical node A generates a shard (shard) view based on the node set, and synchronizes the shard view to the physical node corresponding to the another virtual node in the virtual node cluster.

In this embodiment of this application, a preset quantity of shards, for example, 4096 shards, are set for the virtual cluster, and these shards are evenly allocated to all the virtual nodes in the global view 604, that is, the shard view is generated. The generated shard view is shown as a shard view in FIG. 3B. The shard is configured to store a directory and a file of the file system 605 to the physical nodes corresponding to all the virtual nodes in the global view 604 in a distributed manner. A specific function of the shard view is described in detail below. After the shard view is generated, the physical node A stores the shard view to the local memory 603 and the persistent storage medium 601, and synchronizes the shard view to the physical nodes (physical nodes B, C, and D) corresponding to the other virtual nodes and the persistent storage medium 701 of the second storage device 700.

Step S303: The physical node A generates a data backup policy, and synchronizes the data backup policy to the physical node corresponding to the another virtual node in the virtual node cluster.

To ensure data reliability, and prevent data loss after a device fault, the data backup policy may be set in this embodiment of this application, that is, generated data is backed up to a plurality of nodes. The backup policy in this embodiment of this application is backing up three copies of the data, where two copies are stored in two local physical nodes, and the other copy is stored in a physical node of a remote storage device. Specifically, in a backup policy shown in FIG. 3B, a group of backup nodes are set for each virtual node. For example, backup nodes corresponding to the virtual node Vnode A are set to the virtual nodes Vnode B and Vnode C, virtual nodes corresponding to the virtual node Vnode B are set to the Vnode A and Vnode D, virtual nodes corresponding to the virtual node Vnode B are set to Vnode A and Vnode D, and virtual nodes corresponding to the virtual node Vnode D are set to Vnode C and Vnode B. After the backup policy is generated, the node A stores the backup policy to the local memory 603 and the persistent storage device 601, and synchronizes the backup policy to the persistent storage device 701 of the second storage device 700 and the physical node corresponding to the another virtual node in the global view.

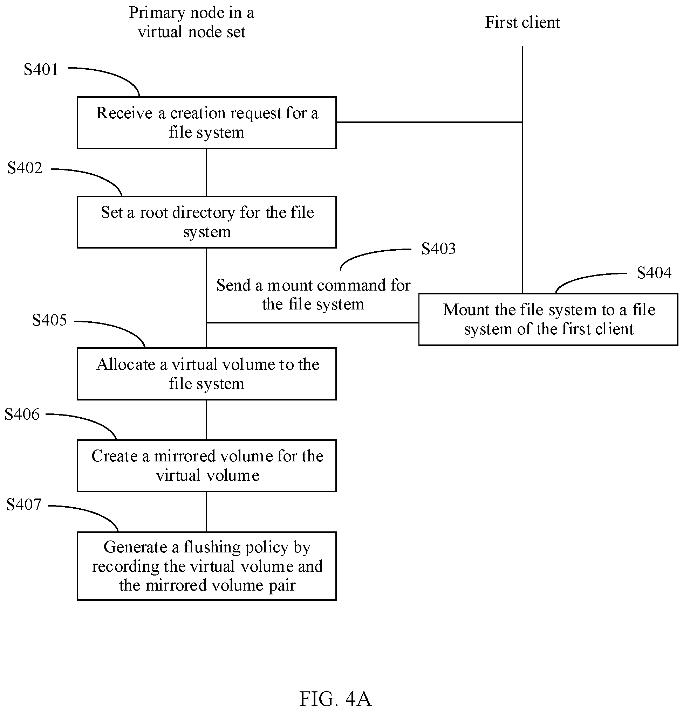

In FIG. 3A, establishment of the virtual cluster is performed by a management module. In FIG. 3A and FIG. 4A, an example in which the management module is located in the first storage device is used for description. After generating the file system and the global view, the management module may send the generated file system and global view to the first storage device and the second storage device for storage. In another embodiment, the management module may be alternatively located in an independent third-party management device. After generating the file system and the global view, the third-party management device sends the file system and the global view to the first storage device and the second storage device for storage, so that each physical node can obtain the global view.

During running of the established virtual cluster, a monitoring module monitors changes of the virtual nodes in the first storage device and the second storage device. The monitoring module notifies the management module to update the global view when detecting that a new virtual node is added to the virtual cluster, or when a virtual node is deleted, for example, a physical node corresponding to the virtual node is faulty. The monitoring module may be located in the third-party management device, or may be located in the first storage device or the second storage device. The first storage device serves as a primary storage device, the second storage device sends the monitored change to the first storage device, and the management module in the first storage device updates the global view. In this way, establishment of the virtual node cluster can be completed. After the virtual node cluster is established, the first storage device 600 and the second storage device 700 may establish the file system based on a request of the client. Details are shown in the flowchart in FIG. 4A.

Step S401: The physical node A receives a file system creation request.

The first client 800 may send the file system creation request to the first storage device 600, or may send the file system creation request to the second storage device 700. If the first storage device 600 receives the file system creation request, the physical node A processes the file system creation request. If the second storage device 700 receives the file system creation request, the second storage device 700 forwards the file system creation request to the physical node A of the first storage device 600 for processing.

Step S402: The physical node A sets a root directory for the file system.

When setting the root directory, the primary node first generates a mark of the root directory. Generally, a default mark of the root directory is "/". Then, identification information and a shard ID are allocated to the root directory. Because the shard view created by the primary node is synchronized to all the nodes, the primary node obtains the shard view from the memory of the primary node and selects the shard ID for the root directory from the shard view. As shown in FIG. 3B, a plurality of shard IDs are allocated to each virtual node in the shard view. Therefore, to reduce cross-network and cross-node access, a shard ID in the shard IDs included in the virtual node Vnode A corresponding to the physical node A is preferably allocated to the root directory. For the root directory, no shard ID has been allocated. Therefore, for example, a shard 0 may be selected as the shard ID of the root directory.

Step S403: The physical node A sends a mount command for the file system to the first client 800.

After the root directory of the cluster file system is generated, to enable the first client 800 to access the file system, the physical node A mounts the file system to a file system of the first client 800. For example, the physical node A provides the root directory of the file system to the first client 800 by using the mount command. When sending the mount command, the physical node A carries parameter information of the root directory. The parameter information of the root directory is handle information of the root directory, and the handle information carries the shard ID and the identification information of the root directory.

Step S404: The first client 800 mounts the cluster file system to the file system of the first client 800 according to the mount command.

After receiving the parameter information of the root directory of the file system, the first client 800 generates a mount point on the file system of the first client, and records the parameter information of the root directory of the file system at the mount point. The mount point is a segment of storage space.

In this way, in addition to performing data transmission with the first storage device 600 by using the first file system 608, the first client 800 can alternatively perform data transmission with the first client 800 by using the file system 605. The user can select, based on an actual requirement, a file system that the user needs to access.

Step S405: The physical node A allocates a virtual volume to the file system.

A virtual volume Vvloume 0 is allocated to each newly created file system, and is used to write data written by the first client or the second client to the file system. Step S406: The physical node A creates a mirrored volume pair for the virtual volume.

After the virtual volume Vvloume 0 is established, the physical node A first creates a local volume based on the persistent storage medium 601, for example, the first volume in FIG. 2, and then requests the second storage device 700 to create a mirrored volume of the first volume in the second storage device 700, for example, the second volume file system file system in FIG. 2.

Step S407: The physical node A generates a flushing policy by recording the virtual volume and the corresponding mirrored volume pair.

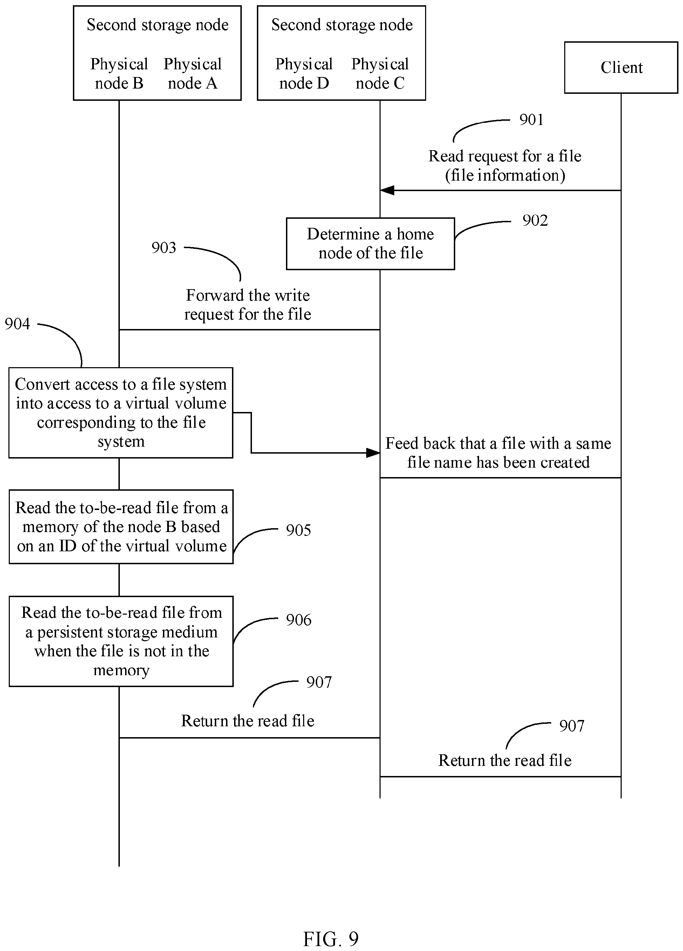

The generated flushing policy is shown as a flushing policy shown in FIG. 3B, and the virtual volume of the file system corresponds to the mirrored volume pair (the first volume and the second volume). According to the flushing policy shown in FIG. 3B, data that is of the file system and that is cached in the memory may be separately stored in the persistent storage medium 601 of the first storage device 600 and the persistent storage medium 701 of the second storage device 700, to ensure data reliability. Specifically, how to write the data in the memory to the persistent storage medium 601 and the persistent storage medium 701 according to the flushing policy is described in detail in FIG. 9.

After the flushing policy is generated, the physical node A stores the flushing policy of the file system to the local memory 603 and the persistent storage device 601, and synchronizes the flushing policy of the file system to the persistent storage device 701 of the second storage device 700 and the physical node corresponding to the another virtual node in the global view.

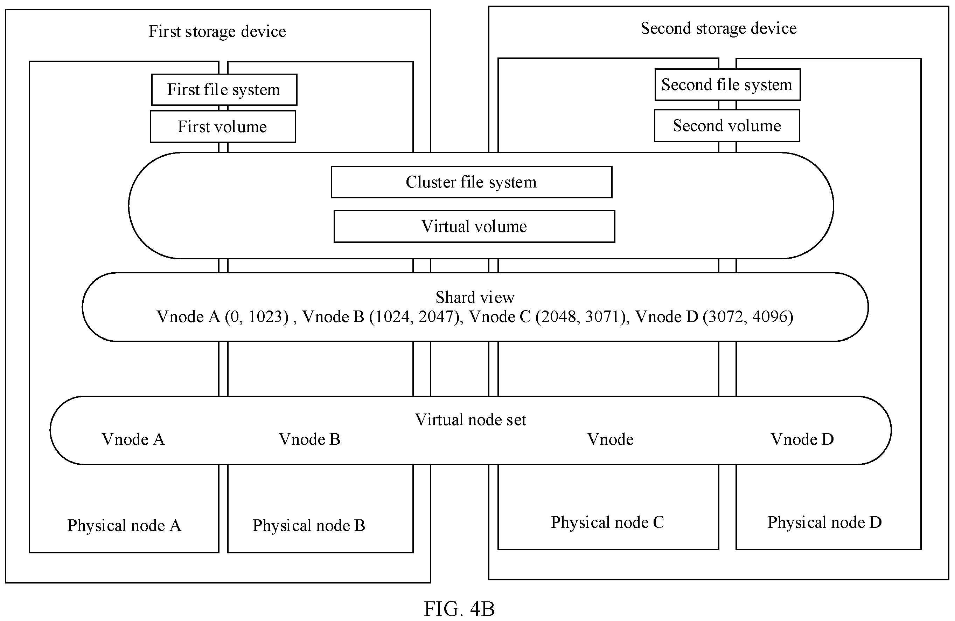

By performing the methods in FIG. 3A and FIG. 4B, creation of the active-active file system in the active-active mode can be completed. A schematic diagram of the active-active storage system in which the file system is created is shown in FIG. 4B, that is, the cross-device file system, virtual volume, shard view, and global view are generated on the first storage device and the second storage device.

After the active-active storage system in the active-active mode is created, a directory and a file may be created and accessed based on the file system.

First, a process of creating the directory under the file system is described with reference to the flowchart shown in FIG. 5. The following uses the root directory as a parent directory and uses the to-be-created directory as a subdirectory of the parent directory for description. In this embodiment of this application, the user may access the first storage device by using the first client, to create the subdirectory, or may access the second storage device by using the second client, to create the subdirectory. When the first storage device mounts the file system to the first client, a path for the first client to access the file system is established. For example, if the first storage device mounts the file system to the first client by using the physical node A, the first client accesses the file system by using the physical node A. To implement active-active access in the active-active mode, the second storage device also mounts the file system to a file system of the second client. In this way, a path for the second client to access the file system is established, and a request for accessing the file system by the second client is sent to a physical node, for example, the physical node C, that mounts the file system. The following describes a subdirectory creation process by using an example in which a subdirectory creation request is sent to the second storage device by using the second client.

A specific creation process is shown in the flowchart in FIG. 5.

Step S501: The second client sends the subdirectory creation request to the physical node C.

The physical node C is a primary node of the second storage device 700, namely, the node that mounts the file system to the second client. The subdirectory creation request includes parameter information of the parent directory and a name of the subdirectory.

Step S502: The physical node C receives the creation request sent by the second client, and generates parameter information for the subdirectory based on the creation request.

The parameter information includes identification information of the parent directory and a shard ID. The identification information is used to uniquely identify the subdirectory, and the identification information is, for example, an object ID in an NFS file system. When generating the shard ID, the physical node C searches the shard view, allocates a shard ID in the shard IDs recorded in the shard view to the subdirectory, and then creates the subdirectory in a physical node corresponding to a virtual node to which the shard ID belongs. It should be noted that each directory may be allocated one shard ID, but one shard ID may be allocated to a plurality of directories. In this embodiment of this application, to reduce data forwarding, a shard ID in shard IDs of a virtual node corresponding to a physical node that receives the subdirectory request is allocated to the subdirectory. To be specific, a shard ID in shard IDs [2048, 3071] corresponding to the virtual node Vnode C corresponding to the physical node C is allocated to the subdirectory. However, when a quantity of directories corresponding to the shard IDs in the virtual node Vnode C exceeds a preset threshold, a shard ID corresponding to another virtual node is allocated to the subdirectory.

Step S503: The physical node C creates the subdirectory.

Creating the subdirectory includes generating a directory entry table (DET) and an inode table for the subdirectory. The directory entry table is used to record, when the subdirectory serves as a parent directory after the subdirectory is successfully created, parameter information of a subdirectory or a file created under the subdirectory. The parameter information includes, for example, a name of the subdirectory, and identification information and a shard ID of the directory or the file.

The inode table is used to record detailed information about a file subsequently created in the subdirectory, for example, information such as a file length of the file, operation permission of the user on the file, and a modification time point of the file.

Step S504: The physical node C determines, based on the parameter information of the parent directory, the physical node B that is in the first storage device and to which the parent directory belongs.

The parameter information of the parent directory includes the shard ID. It may be determined, in the shard view, that a virtual node corresponding to the shard ID is the virtual node Vnode B, and then it is further determined, based on the virtual node Vnode B, that a physical node corresponding to the virtual node Vnode B is the physical node B in the first storage device.

Step S505: The physical node C sends the parameter information of the subdirectory and the parameter information of the parent directory to the physical node B.

Step S506: The physical node B finds a directory entry table of the parent directory based on the parameter information of the parent directory.

Specifically, the parent directory may be found based on the shard ID and a name of the parent directory in the parameter information of the parent directory.

Step S507: The physical node B records the parameter information of the subdirectory to the directory entry table of the parent directory.

Step S508: The physical node B first returns the parameter information of the subdirectory to the physical node C, and then the physical node C returns the parameter information of the subdirectory to the second client.

In a process of accessing the file, for example, reading the file or creating the file, in the file system, because the file is created under a directory, the directory needs to be found first before the file under the directory is further accessed. If the to-be-accessed file is under a multi-level directory, the directory needs to be queried level by level until a bottommost-level directory is found. For example, for a multi-level directory filesysterm1/user1/favorite, because parameter information of a root directory has been recorded in the file system of the first client, the client first queries parameter information of a subdirectory user1 based on the parameter information of the root directory filesystem1, that is, generates a request for querying the "user1", and after the parameter information of the "user1" is queried, queries parameter information of the "favorite" based on the parameter information of the "user1", that is, generates a request for querying the "favorite". A method for querying parameter information of a directory at each level is the same. The following uses an example in which an upper-layer directory is the parent directory and a to-be-queried directory is the subdirectory to describe a directory query process. In this embodiment of this application, an example in which the physical node C of the second storage device receives a query request is still used for description.

Step S601: The second client sends a query request for the subdirectory to the physical node C.

The query request carries parameter information of the parent directory and a name of the subdirectory. The parameter information of the parent directory is, for example, a handle of the parent directory. When the parent directory is a root directory, a handle of the root directory is obtained from the file system of the client. When the parent directory is not a root directory, the handle of the parent directory may be found by using a query request for querying the parent directory.

The handle of the parent directory includes identification information and a shard ID of the parent directory.

Step S602: The physical node C receives the query request sent by the second client, and determines, based on the query request, the physical node B to which the parent directory belongs.

The physical node C obtains a shard ID of the root directory from parameter information of the root directory, and obtains, based on the shard ID, a virtual node to which the parent directory belongs.

Because the physical node A synchronizes the created shard view to all the nodes, the physical node C obtains the shard view from a memory of the physical node C, determines, based on the shard ID of the parent directory, the virtual node to which the parent directory belongs, and then determines a physical node corresponding to the virtual node.

Step S603: The physical node C sends the parameter information of the parent directory and the name of the subdirectory to the physical node B at which the parent directory is located.

Step S604: The physical node B determines a directory entry table of the parent directory based on the parameter information of the parent directory.

Refer to the descriptions in FIG. 5. When creating the parent directory, the physical node B creates the directory entry table for the parent directory, and the directory entry table records parameter information of all subdirectories created under the parent directory.

Step S605: The physical node B obtains the parameter information of the subdirectory from the directory entry table of the parent directory.

Step S606: The physical node B returns the parameter information of the subdirectory to the physical node C.

Step S607: The physical node C returns the parameter information of the subdirectory to the second client.

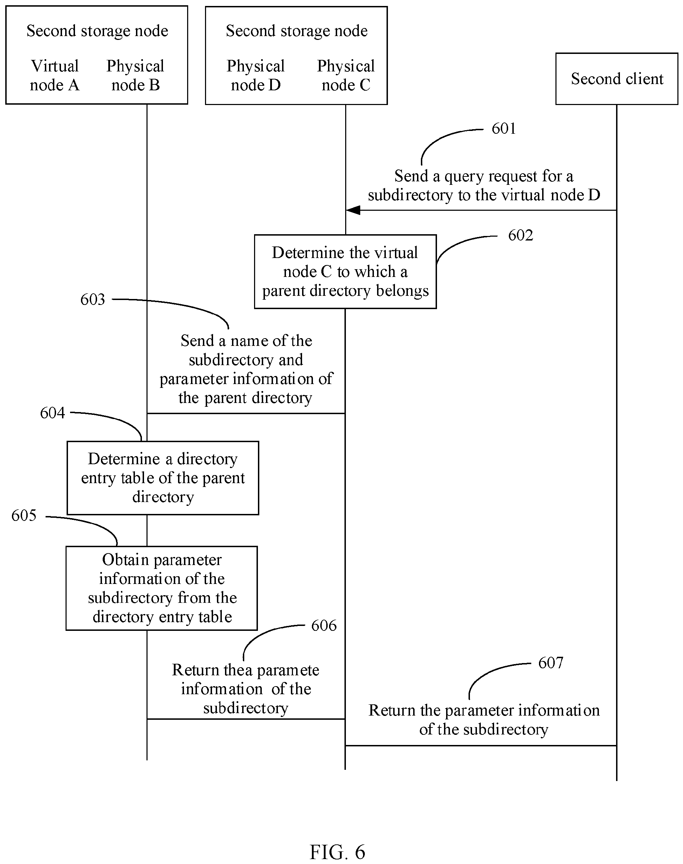

In FIG. 5 and FIG. 6, an example in which the second client accesses the second storage device and creates and queries the subdirectory in the file system is used for description. However, in practical application, the first client may also create and query the subdirectory by accessing the first storage device.

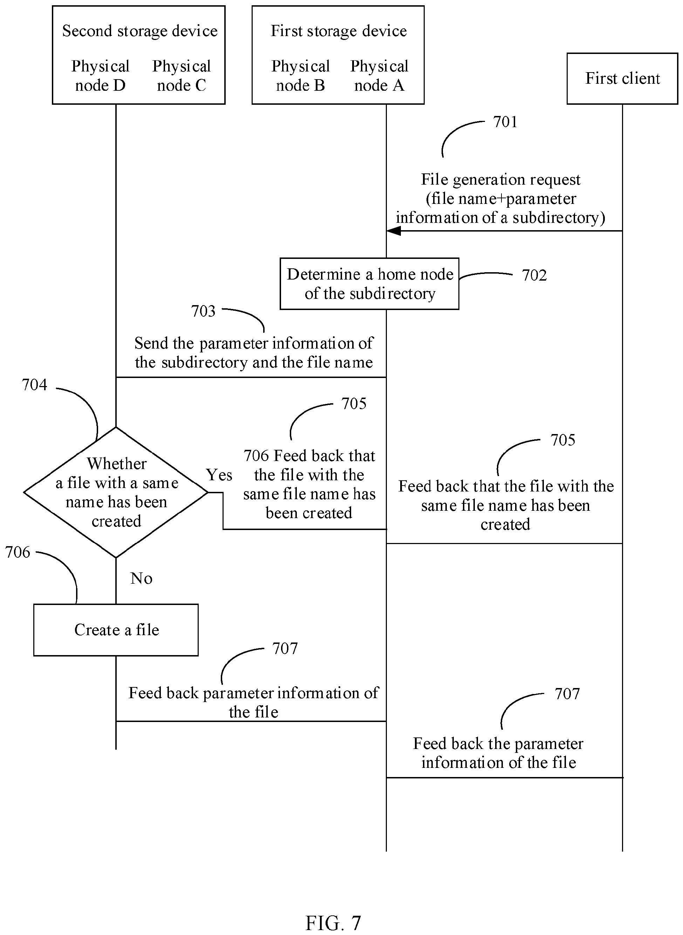

After the subdirectory is found or a new subdirectory is created, the first client or the second client may obtain the parameter information of the subdirectory, and then may create a file in the subdirectory based on the parameter information of the subdirectory. The following describes a process in which the user accesses the first storage device by using the first client and creates the file in the subdirectory. Details are shown in FIG. 7.

Step S701: The client sends a file generation request to the physical node A.

The file generation request carries the parameter information of the subdirectory and a file name.

As shown in FIG. 5 or FIG. 6, the physical node A has sent the parameter information of the subdirectory to the client. Therefore, when needing to create the file in the subdirectory, the client may add the parameter information of the subdirectory and the file name of the file to the file query request.

Step S702: After receiving the file generation request, the physical node A determines, based on the parameter information of the subdirectory, the physical node D to which the subdirectory belongs.

A manner of determining the physical node D to which the subdirectory belongs is the same as Step S602 in FIG. 6. Details are not described herein again.

Step S703: The physical node A sends the parameter information of the subdirectory and the file name to the physical node D.

Step S704: The physical node D determines whether the file has been created.

The physical node D finds the subdirectory based on the shard ID and the subdirectory name in the parameter information of the subdirectory, then finds a DET corresponding to the subdirectory, and searches the DET for the file name. If the file name exists, it indicates that a file with the same file name has been created, and Step S705 is performed. If the file name does not exist, it indicates that the file can be created in the subdirectory, and Step S706 is performed.

Step S705: The node D sends, to the node A, a feedback indicating that the file name has been created, and the node A further feeds back the feedback to the first client.

After receiving the feedback message, the first client may further notify, by using a notification message, the user that the file with the same file name already exists, and the user may perform a further operation based on the notification information, for example, change the file name.

Step S706: The node D creates the file.

When creating the file, the node D sets parameter information for the file, for example, allocates a shard ID, allocates file identification information, and adds the shard ID and the file identification information to the DET of the subdirectory. As described in Step S503 in FIG. 5, when the subdirectory is created, the inode table is generated for the subdirectory, and the inode table is used to record information about a file generated under the subdirectory. Therefore, in this step, after the node D creates the file, information about the file is added to the inode table in the subdirectory. The file information includes information such as a file length, operation permission of the user on the file, and a modification time point of the file.

Step S707: The physical node D feeds back the parameter information of the file.

The physical node D first sends the feedback information to the node A, and the node A further feeds back the feedback information to the first client.

In step S702, when the physical node A determines that a home node of the subdirectory is the physical node A, the physical node A performs Steps S704 to S707.

It should be noted herein that the subdirectory generated in FIG. 6 and the file generated in FIG. 7 are backed up to the corresponding backup nodes according to the backup policy set in FIG. 3B.

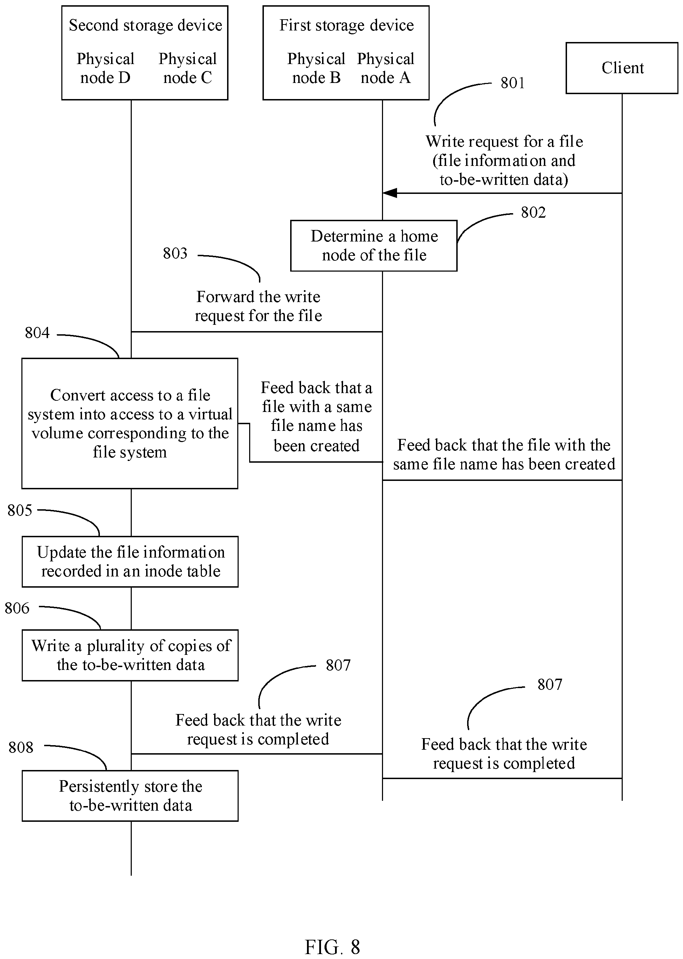

After the file is created, the user may write data to the file. The user may write the data to the file by using the first client connected to the first storage device and the second client connected to the second storage device. The following uses a process in which the user accesses the first storage device by using the first client and writes the data to the file as an example for description. Details are shown in FIG. 8.

Step S801: The physical node A receives a write request for the file.

In this embodiment of this application, because any node stores the file system, the user may access the file in the file system by using a client connected to any node.

The write request carries address information of the file, and the address information includes parameter information of the file, an offset address, and the to-be-written data. In this embodiment of this application, the parameter information of the file is a handle of the file, and includes a file system identifier, a file identifier, and a shard ID.

Step S802: The physical node A determines the home node D of the file based on the write request.

For a manner of determining, based on the shard ID of the file, the home node D of records the file, refer to step S602 in FIG. 6. Details are not described herein again.

Step S803: The physical node A forwards the write request to the physical node D.

Step S804: The physical node D converts access to the file system into access to the virtual volume corresponding to the file system.

Because each physical node records the virtual volume created for the file system, the physical node D replaces the file system identifier in the write request with an identifier of the virtual volume.

Step S805: The physical node D finds the file based on the file identifier and the shard ID in the write request, and updates the information about the file.

After finding the file based on the file identifier and the shard ID, the physical node D finds an inode entry corresponding to the file in the inode table based on an inode number of the file included in the file identifier, and records the information about the file in the inode entry, for example, based on a length of the to-be-written data and the offset address that are carried in the write request, updates a length of the file and the offset address, and records a current time point as an update time point of the file.

Step S806: The physical node D writes a plurality of copies of the to-be-written data based on a preset backup policy.

When the virtual file cluster is established, the backup policy is established for the file system. In the backup policy, a backup node is set for each node. For example, according to the backup policy set in FIG. 3B, it may be determined that backup nodes of the physical node D are the physical node C and the physical node B. In this case, when writing the to-be-written data to a local memory, the physical node D sends the to-be-written data to the physical node C and the physical node B, and the physical node C and the physical node B write the to-be-written data to memories of the physical node C and the physical node B.

Step S807: After determining that writing of the plurality of copies is completed, the physical node D returns, to the first client, a message indicating that the write request is completed.

Step S808: The physical node D persistently stores the to-be-written data.

According to the flushing policy shown in FIG. 3B, the virtual volume of the file system corresponds to the mirrored volume pair: the first volume in the first storage device and the second volume in the second storage device. When determining, based on a preset memory eviction algorithm, that the to-be-written data needs to be evicted to a persistent storage device, that is, flushed to a disk, the physical node D first obtains, from the flushing policy based on the virtual volume recorded in an address in the to-be-written data, the mirrored volume pair corresponding to the virtual volume, namely, the first volume in the first storage device and the second volume in the second storage device, then writes the to-be-written data in a memory of the second storage device to physical space corresponding to the second volume in the persistent storage device 701, and next, sends a memory address of the to-be-written data to the backup node B corresponding to the physical node D in the first storage device. The physical node B writes, based on the memory address, the to-be-written data stored in a memory of the physical node B to physical space corresponding to the first volume in the persistent storage device 601 of the first storage device.

FIG. 9 is the flowchart of a file reading method according to an embodiment of this application.

In this embodiment of this application, the user may also access a file in the file system by using any client. In this embodiment, an example in which the user reads the file by using the second client is used for description.

Step S901: The physical node C receives a read request for the file.

The read request carries address information of the file. The address information includes parameter information of the file and an offset address, and the parameter information is a handle of the file, and includes a file system identifier, a file identifier, and a shard ID. When the second client sends the read request, the parameter information of the file has been obtained according to the method shown in FIG. 6.

Step S902: The physical node C determines the home node B of the file based on the read request.

For a manner of determining the home node B of the file, refer to the descriptions of Step S602 in FIG. 6. Details are not described herein again.

Step S903: The physical node C forwards the read request to the home node B.

Step S904: The physical node B converts access of the read request to the file system into access to the virtual volume of the file system.

Step S905: The physical node B reads the file from the memory of the physical node B based on an address in the read request.

Step S906: The physical node B returns the file.

Step S907: When the file is not in the memory, the physical node B reads the file from the persistent storage device 601 based on the first volume in the first storage device corresponding to the virtual volume in the flushing policy, and returns the file to the physical node C, and then the physical node C returns the file to the second client.

In embodiments of this application, when accessing a file and a directory, the first storage device and the second storage device forward access requests to home nodes of the file and the directory based on shard IDs. This results in cross-device data access, and further affects access efficiency. In a possible implementation provided in this embodiment of this application, because both the first storage device and the second storage device back up the data of the peer ends, when an access request for accessing data of a peer end is received, the data that needs to be accessed may be obtained from the backup data that is of the peer end and that is backed up by a local end, and the to-be-accessed data does not need to be obtained from the peer end. This improves data access efficiency.

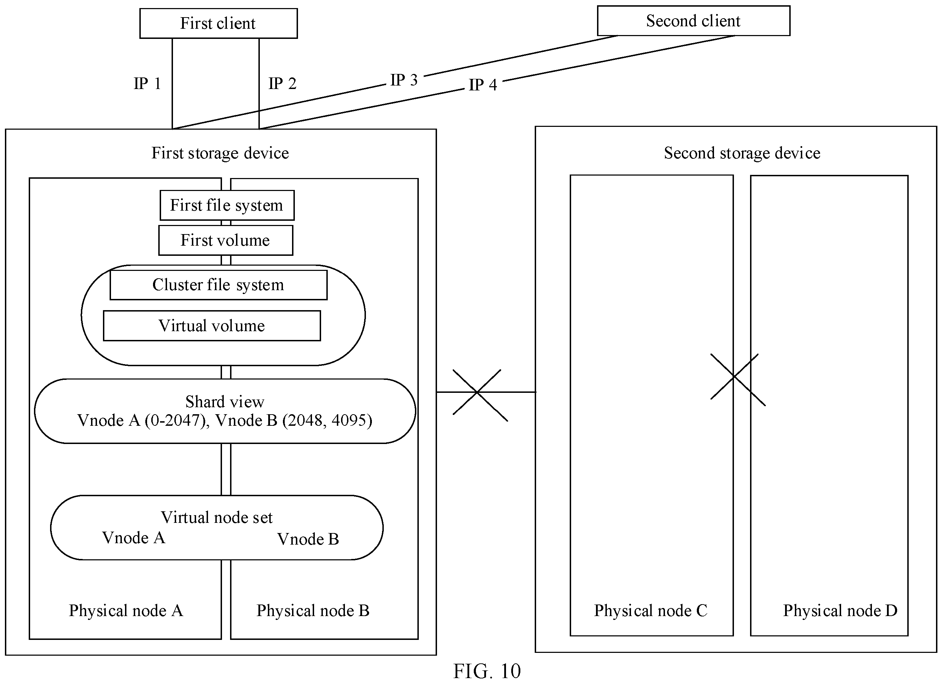

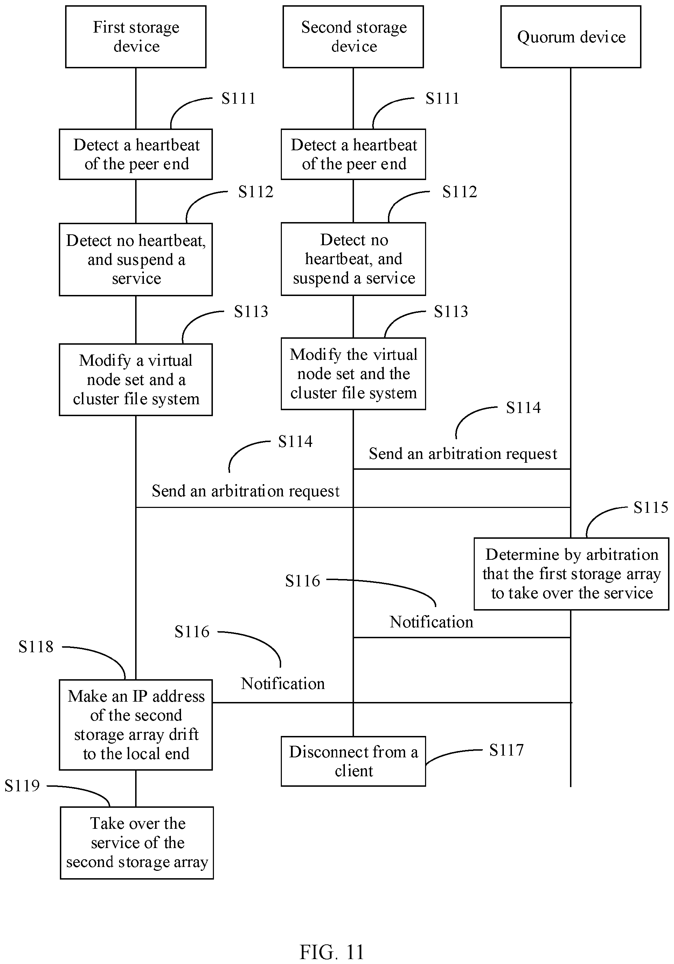

When one storage device in the active-active storage system in the active-active mode is faulty, a service of the faulty storage device may be taken over by using backup data. As shown in FIG. 10, after a link between the first storage device and the second storage device is disconnected or the second storage device is faulty, a service of the second storage device may be taken over by using the backup data of the second storage device stored in the first storage device. The following uses an example in which the link between the first storage device and the second storage device is disconnected for description. Details are shown in a flowchart shown in FIG. 11.

Step Sill: The first storage device and the second storage device detect heartbeats of the peer ends at the same time.

Step S112: When the heartbeats of the peer ends are not detected, the first storage device and the second storage device each suspend a service that is being executed.

Suspending the service refers to stopping an access request that is being executed.

Step S113: The first storage device and the second storage device modify the global view and the file system.

When the heartbeats of the peer ends are not detected, the first storage device and the second storage device need to prepare for taking over services of the peer ends, modify the global view and the file system, delete the virtual nodes corresponding to the physical nodes of the peer ends in the global view from the global view, and delete the backup nodes of the peer ends in the backup policy. For example, the first storage device modifies the global view to (Vnode A, Vnode B), and the second storage device modifies the global view to (Vnode C, Vnode D). In addition, the shards of the virtual nodes corresponding to the peer nodes in the shard view in the file system are modified to the shards corresponding to the virtual nodes corresponding to the local nodes. For example, the shard view in the first storage device is modified to a Vnode A [0, 2047] and a Vnode B [2048, 4095], the shard view in the second storage device is modified to a Vnode C [0, 2047] and a Vnode D [2048, 4095], and the volumes of the peer nodes in the flushing policy are deleted.

Step S114: The first storage device and the second storage device each send an arbitration request to a quorum device.

Step S115: The quorum device determines through arbitration that the first storage device takes over the service.

The quorum device may determine, based on a sequence of receiving the arbitration requests, a device that takes over a service. For example, a storage device corresponding to a first received quorum request serves as the device that takes over the service.

Step S116: The quorum device separately notifies the first storage device and the second storage device of an arbitration result.

Step S 117: After receiving the notification, the second storage device disconnects from the second client, that is, stops executing the service.

Step S 118: After receiving the notification, the first storage device makes an IP address of the second storage array drift to the first storage device, and establishes a connection to the second client.

Step S119: Take over the service of the second storage array by using the backup data of the second storage array.

Because the backup data of the second storage array is stored in the first storage device, when receiving access to the data in the first storage device, the first storage device can locate, by using shard IDs in access requests, the access requests of the first client and the second client for the data in the second storage device to access to the backup data, so that the first client and the second client do not perceive link interruption.

In a data access process, because the backup policy and the flushing policy are changed, written data is written only to a memory of a node of the first storage device, and is stored only in the volume of the first storage device.

The solutions provided in embodiments of this application are described above. The principle and implementation of this application are described through specific examples in this specification. The descriptions of embodiments of this application are merely provided to help understand the method and core ideas of this application. In addition, a person of ordinary skill in the art can make variations and modifications to this application in terms of the specific implementations and application scopes according to the ideas of this application. Therefore, the content of this specification shall not be construed as a limit to this application.

## Claims

1. An active-active storage system, comprising a first storage device and a second storage device, wherein the first storage device is configured to: receive data of a first file sent by a client cluster to a file system, store the data of the first file, and send first copy data of the data of the first file to the second storage device; and
the second storage device is configured to: receive data of a second file sent by the client cluster to the file system, store the data of the second file, and send second copy data of the data of the second file to the first storage device.

2. The system according to claim 1, wherein the active-active storage system further comprises a virtual node set, the virtual node set comprises a plurality of virtual nodes, a computing resource is allocated to each virtual node, and the computing resource comes from a physical node in the first storage device or the second storage device.

3. The system according to claim 2, wherein the active-active storage system further comprises a management device, the management device is further configured to create a global view, and the global view is used to record a correspondence between each virtual node and the computing resource allocated to the virtual node;
the management device is further configured to send the global view to the first storage device and the second storage device;
the first storage device is further configured to store the global view; and
the second storage device is further configured to store the global view.

4. The system according to claim 3, wherein when storing the data of the first file, the first storage device is specifically configured to:
determine, based on an address of the data of the first file, a first virtual node corresponding to the first file;
determine, based on the first virtual node and the global view, a computing resource allocated to the first virtual node; and
send, based on the computing resource allocated to the first virtual node, the data of the first file to a physical node corresponding to the computing resource, so that the physical node stores the data of the first file to a memory of the physical node.

5. The system according to claim 4, wherein the first virtual node has at least one backup virtual node, and a physical node corresponding to the first virtual node and a physical node corresponding to the backup virtual node are located in different storage devices; and
the first storage device is further configured to:
determine the backup virtual node corresponding to the first virtual node;
determine, based on the backup virtual node and the global view, the physical node corresponding to the backup virtual node; and
send the first copy data to the physical node corresponding to the backup virtual node, so that the physical node corresponding to the backup virtual node stores the first copy data to the physical node.

6. The system according to any one of claims 2 to 5, wherein a file and a directory that are comprised in the file system are distributed in physical nodes corresponding to the plurality of virtual nodes in the virtual node set.

7. The system according to claim 6, wherein one or more shard identifiers are set for each virtual node in the virtual node set, one shard identifier is allocated to each directory and file in the file system, and the physical nodes in the first storage device and the second storage device distribute, based on the shard identifier of each directory and file, the directory and the file to a physical node corresponding to a virtual node to which the shard identifier belongs.

8. The system according to claim 7, wherein a first physical node in the first storage device is configured to: receive a creation request of the first file, select one shard identifier for the first file from one or more shard identifiers set for a virtual node corresponding to the first physical node, and create the first file in the storage device.

9. The system according to any one of claims 2 to 8, wherein when the second storage device is faulty or a link between the first storage device and the second storage device is disconnected, the first storage device is further configured to: recover the second file based on the second copy data of the data of the second file, and take over a service sent by the client cluster to the second storage device.

10. The system according to claim 9, wherein the first storage device is further configured to delete, from the global view, a virtual node corresponding to a computing resource of the second storage device.

11. The system according to claim 1, wherein the first storage device further has a first file system, and the second storage device further has a second file system.

12. A data processing method, performed by an active-active storage system, wherein the active-active storage system comprises a first storage device and a second storage device, and the method comprises:
receiving, by the first storage device, data of a first file sent by a client cluster to a file system, storing the data of the first file, and sending first copy data of the data of the first file to the second storage device; and
receiving, by the second storage device, data of a second file sent by the client cluster to the file system, storing the data of the second file, and sending second copy data of the data of the second file to the first storage device.

13. The method according to claim 12, wherein the active-active storage system further comprises a virtual node set, the virtual node set comprises a plurality of virtual nodes, a computing resource is allocated to each virtual node, and the computing resource comes from a physical node in the first storage device or the second storage device.

14. The method according to claim 13, wherein the active-active storage system further comprises a management device, and the method further comprises:
creating, by the management device, a global view, wherein the global view is used to record a correspondence between each virtual node and the computing resource allocated to the virtual node;
sending, by the management device, the global view to the first storage device and the second storage device; and
storing, by the first storage device and the second storage device, the global view.

15. The method according to claim 14, wherein when storing the data of the first file, the first storage device is specifically configured to:
determine, based on an address of the data of the first file, a first virtual node corresponding to the first file;
determine, based on the first virtual node and the global view, a computing resource allocated to the first virtual node; and
send, based on the computing resource allocated to the first virtual node, the data of the first file to a physical node corresponding to the computing resource, so that the physical node stores the data of the first file to a memory of the physical node.

16. The method according to claim 15, wherein the first virtual node has at least one backup virtual node, and a physical node corresponding to the first virtual node and a physical node corresponding to the backup virtual node are located in different storage devices; and
the method further comprises:
determining, by the first storage device, the backup virtual node corresponding to the first virtual node;
determining, by the first storage device based on the backup virtual node and the global view, the physical node corresponding to the backup virtual node; and
sending, by the first storage device, the first copy data to the physical node corresponding to the backup virtual node, so that the physical node corresponding to the backup virtual node stores the first copy data to the physical node.

17. The system according to any one of claims 13 to 16, wherein a file and a directory that are comprised in the file system are distributed in physical nodes corresponding to the plurality of virtual nodes in the virtual node set.

18. The method according to claim 17, wherein one or more shard identifiers are set for each virtual node in the virtual node set, one shard identifier is allocated to each directory and file in the file system, and the physical nodes in the first storage device and the second storage device distribute, based on the shard identifier of each directory and file, the directory and the file to a physical node corresponding to a virtual node to which the shard identifier belongs.

19. The method according to claim 18, wherein the method further comprises:
receiving, by a first physical node in the first storage device, a creation request of the first file, selecting one shard identifier for the first file from one or more shard identifiers set for a virtual node corresponding to the first physical node, and creating the first file in the first storage device.

20. The method according to any one of claims 13 to 19, wherein the method further comprises: when the second storage device is faulty or a link between the first storage device and the second storage device is disconnected, recovering, by the first storage device, the second file based on the second copy data of the data of the second file, and taking over a service sent by the client cluster to the second storage device.

21. The method according to claim 20, wherein the method further comprises: deleting, by the first storage device from the global view, a virtual node corresponding to a computing resource of the second storage device.

22. The method according to any one of claims 13 to 21, wherein the first storage device further has a first file system, and the second storage device further has a second file system.
